(19)

Europäisches
Patentamt

European
Patent Office

Office européen
des brevets

(11) **EP 2 026 597 B1**

(12) **EUROPEAN PATENT SPECIFICATION**

(45) Date of publication and mention
of the grant of the patent:
**11.11.2009 Bulletin 2009/46**

(51) Int Cl.:
***H04R 3/00*** (2006.01)

(21) Application number: **07015908.2**

(22) Date of filing: **13.08.2007**

(54) **Noise reduction by combined beamforming and post-filtering**

Rauschverringerung mittels Kombination aus Strahlformung und Nachfilterung

Réduction de bruit par formation de faisceaux et post-filtrage combinés

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**18.02.2009 Bulletin 2009/08**

(73) Proprietor: **Harman Becker Automotive Systems
GmbH
76307 Karlsbad (DE)**

(72) Inventors:
• **Buck, Markus
88400 Biberach (DE)**
• **Wolff, Tobias
89073 Ulm (DE)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 475 997    EP-A- 1 640 971**

• **HERDORDT W ET AL: "FREQUENCY-DOMAIN
INTEGRATION OF ACOUSTIC ECHO
CANCELLATION AND A GENERALIZED
SIDELOBE CANCELLER WITH IMPROVED
ROBUSTNESS" EUROPEAN TRANSACTIONS
ON TELECOMMUNICATIONS, WILEY & SONS,
CHICHESTER, GB, vol. 13, no. 2, March 2002
(2002-03), pages 123-132, XP001123750 ISSN:
1124-318X**

## Description

### Field of Invention

The present invention relates to the art of noise reduction of audio signals in the context of electronically aided communication. In particular, the present invention relates to the beamforming of microphone signals and post-filtering of beamformed signals in order to obtain enhanced acoustic signals, in particular, speech signals.

### Background of the invention

Two-way speech communication of two parties mutually transmitting and receiving audio signals, in particular, speech signals, often suffers from deterioration of the quality of the audio signals by background noise. Background noise in noisy environments can severely affect the quality and intelligibility of voice conversation and can, in the worst case, lead to a complete breakdown of the communication.

A prominent example is hands-free voice communication in vehicles. Hands-free telephones provide a comfortable and safe communication systems of particular use in motor vehicles. In the case of hands-free telephones, it is mandatory to suppress noise in order to guarantee the communication. The amplitudes and frequencies of the noise signals are temporally variable due to, for example, the speed of the vehicle and road noises.

In the art, single channel noise reduction methods employing spectral subtraction are well known. For instance, speech signals are divided into sub-bands by some sub-band filtering means and a noise reduction algorithm is applied to each of the sub-bands. These methods, however, are limited to (almost) stationary noise perturbations and positive signal-to-noise distances. The processed speech signals are distorted, since according to these methods perturbations are not eliminated but rather spectral components that are affected by noise are damped. The intelligibility of speech signals is, thus, normally not improved sufficiently.

EP 1 475 997 A2 discloses a method for the enhancement of electronically mediated communication in a noisy environment wherein acoustic signals are received by two microphone arrays and the method comprising processing of the acoustic signals by a beamformer.

EP 1 640 971 A2 discloses multi-channel adaptive speech signal processing with noise reduction by means of a microphone array and a means for time delay compensation of the microphone signals and an adaptive beamformer.

In a paper by W. Herbordt and W. Kellermann, entitled "Frequency-Domain Integration of Acoustic Echo Cancellation and a Generalized Sidelobe Canceller with Improved Robustness", European Transactions on Telecommunications, Wiley & Sons, Chich-ester, GB, vol. 13, No. 2, March 2002, pages 123 - 132, hands-free human/machine interfaces comprising Generalized Sidelobe Cancellers in conjunction with acoustic echo cancellation are described.

Another method to improve the signal quality in distant talking speech acquisition is the utilization of multi-channel systems, i.e. microphone arrays, as described, e.g., in "Microphone Arrays: Signal Processing Techniques and Applications", eds. Brand-stein, M. and Ward, D., Springer, Berlin 2001. Beamforming of multiple microphone signals is performed in order to obtain an enhanced acoustic signal.

Current multi-channel systems primarily make use of the so-called "General Sidelobe Canceller" (GSC), see, e.g., "An alternative approach to linearly constrained adaptive beamforming", by Griffiths, L.J. and Jim, C.W., IEEE Transactions on Antennas and Propagation, vol. 30., p.27, 1982. The GSC consists of two signal processing paths: a first (or lower) adaptive path with a blocking matrix and an adaptive noise canceling means and a second (or upper) non-adaptive path with a fixed beamformer.

The fixed beamformer improves the signals pre-processed, e.g., by a means for time delay compensation, using a fixed beam pattern. Adaptive processing methods are characterized by a permanent adaptation of processing parameters such as filter coefficients during operation of the system. The lower signal processing path of the GSC is optimized to generate noise reference signals used to subtract the residual noise of the output signal of the fixed beamformer. The noise reduction signal processing path usually comprises a blocking matrix receiving the speech signals and employed to generate noise reference signals. In the simplest realization, the blocking matrix performs a subtraction of adjacent channels of the received signals.

Due to the finite time of convergence needed for adaptation the adaptive beamformers, however, are not very successful in the case of highly time-variant perturbations.

Non-stationary perturbation are, on the other hand, very common in real-life applications.

Thus, there is a need for an improved method and system for noise reduction in the context of beamforming of microphone signals.

### Description of the Invention

In view of the above, in the present invention it is provided a method for audio signal processing, comprising

detecting an audio signal, in particular, a speech signal, by a microphone array to obtain microphone signals ($y_m$);
processing the microphone signals ($y_m$) by a beamforming means (11) to obtain a beamformed signal (A) ;
processing the microphone signals ($y_m$) by a blocking matrix means (12) to obtain the (spectral) power densities ($U_m$) of noise contributions of each of the microphone signals ($y_m$);
processing the power densities ($U_m$) of noise contributions of each of the microphone signals ($y_m$) to obtain an average short-time power density (V) from the power densities ($U_m$) of noise contributions of each of the microphone signals ($y_m$);
estimating the (spectral) power density of a noise contribution (An) of the beamformed signal (A) on the basis of the average short-time power density (V) obtained from the power densities ($U_m$) of noise contributions of each of the microphone signals ($y_m$); and
post-filtering the beamformed signal (A) on the basis of the estimated (spectral) power density ($\tilde{A}_n$) of the noise contribution ($A_n$) of the beamformed signal (A) to obtain an enhanced beamformed signal (P).

The microphone array comprises a number (M) of microphones, in particular, directional microphones. Each of the microphones detects sound, e.g., a verbal utterance, and generates a microphone signal $y_m$ (m= 1, .., M). It is an object of the present invention to enhance such microphone signals by noise reduction. In order to achieve this object, the microphone signals are beamformed by a beamforming means, e.g., a fixed (non-adaptive) beamformer as known in the art, and processed by a blocking matrix means that is designed to obtain noise signals representing noise that is present in the microphone signals.

In the following description, it is assumed that the signal processing is performed in the sub-band domain rather than a discrete time domain. However, in principle, the present invention can be realized for both the time and spectral signal representation. For processing in the sub-band regime the microphone signals ($y_m$) can be divided into sub-bands by an analysis filter bank to obtain sub-band signals $Y_m(e^{j\Omega_\mu},k)$ at time k for the frequency sub-band $\Omega_\mu$ ((the imaginary unit is denoted by j)). Similarly, the enhanced beamformed signal (P) can be filtered by a synthesis filter bank to obtain an enhanced audio signal, e.g., a noise reduced speech signal.

The beamformed signal in the sub-band domain represents a Discrete Fourier transform coefficient $A(e^{j\Omega_\mu},k)$ at time k for the frequency sub-band $\Omega_\mu$ as known in the art. This output signal of the beamforming means is post-filtered for noise reduction. It is noted that the beamformed signal $A(e^{j\Omega_\mu},k)$ can already be a noise reduced signal obtained by means of the (power densities) noise contributions of each of the microphone signals ($y_m$) that are obtained by the blocking matrix means. The noise contributions of each of the microphone signals can be already be subtracted for the obtained beamformed signal $A(e^{j\Omega_\mu},k)$ as it is realized by a General Sidelobe Canceller (GSC) employing a delay-and-sum beamformer, for example. In this case, the post-filtering process removes residual noise still present after the processing of the microphone signals by the GSC.

Moreover, an adaptive weighted sum beamformer may be employed that combines time aligned signals $y_m$ of M microphones to obtain one output signal by employing filtering (beamforming) weights that are not time-independent as in the case of a fixed beamformer, but have to be recalculated repeatedly as is required, e.g., to maintain sensitivity in the desired direction and to minimize sensitivity in the directions of noise sources.

It is an essential feature of the present invention that post-filtering process of the beamformed signal (A) is carried out on the basis of the estimated (spectral) power density ($\tilde{A}_n$) of the noise contribution (An) of the beamformed signal (A) wherein the estimated (spectral) power density ($\tilde{A}_n$) is obtained on the basis of the obtained average short-time power density (V) of the noise contributions of each of the microphone signals ($y_m$), i.e.

$$V(e^{j\Omega_\mu},k) = \frac{1}{M}\sum_{m=1}^{M}U_m\left(e^{j\Omega_\mu},k\right) U^{\star}_m\left(e^{j\Omega_\mu},k\right)$$

where M denotes the number of microphones and the asterisk the conjugate complex. In each sub-band $U_m(e^{j\Omega_\mu},k)$ denotes the (spectral) power density of a noise contribution present in the microphone signal $y_m(I)$ (after sub-band filtering of the microphone signal).

The usage of the average short-time power density of the noise contributions of each of the microphone signals for the estimate of the power density of the noise contribution of the beamformed signal for filtering the beamformed signal results in a significantly enhanced (noise reduced) beamformed signal as compared to the solutions proposed in the art.

The step of post-filtering the output of the beamforming means can preferably by carried out by some Wiener like filter. The filter characteristics of this filter are adapted in accordance with the estimated power density of the noise contribution of the beamformed signal.

An efficient manner to make use of the average short-time power density of the noise contributions of each of the microphone signals in order to obtain filter coefficients for a post-filtering means used for filtering the output signal of the beamforming means is to multiply the short-time power density (V) of the noise contributions of each of the

microphone signals ($y_m$) with a real factor $\beta(e^{j\Omega_\mu},k)$ at time k for the frequency sub-band $\Omega_\mu$ wherein the real factor $\beta(e^{j\Omega_\mu},k)$ is adapted to satisfy the relation for the expectation values E

$$E\{\widetilde{A}_n(e^{j\Omega_\nu},k)\} = E\left\{\left|A(e^{j\Omega_\mu},k)\right|^2_{A_s(e^{j\Omega_\nu},k)=0}\right\}$$

where $\widetilde{A}_n(e^{j\Omega_\mu},k)$, $A_n(e^{j\Omega_\mu},k)$ and $A_s(e^{j\Omega_\mu},k)$ denote the estimated power density $|A_n(e^{j\Omega_\mu},k)|^2$ of the noise contribution (An) of the beamformed signal (A), the noise contribution of the beamformed signal (A) and the portion of the wanted signal of the output of the beamforming means, respectively (A = An + As). If the processed audio signal detected by the M microphones of the microphone array is a speech signal, adaptation of the real coefficient $\beta(e^{j\Omega_\mu},k)$ is preferably only carried out during speech pauses, i.e., in periods in that $A_s(e^{j\Omega_\mu},k) = 0$ is ideally satisfied.

As mentioned above the step of post-filtering the beamformed signal (A) may comprise (or consist of) filtering the beamformed signal (A) by a Wiener filtering means ($H(e^{j\Omega_\mu},k)$) to obtain an enhanced beamformed signal (P) according to $P(e^{j\Omega_\mu},k) = H(e^{j\Omega_\mu},k) A(e^{j\Omega_\mu},k)$, with

$$H(e^{j\Omega_\nu},k) = 1 - \hat{\gamma}_a\left(e^{j\Omega_\nu},k\right)^{-1},$$

where $\hat{\gamma}_a(e^{j\Omega_\mu},k)$ denotes an estimate for $|A(e^{j\Omega_\mu},k)|^2|A_n(e^{j\Omega_\mu},k|^{-2}$, where $A_n(e^{j\Omega_\mu},k)$ is the noise contribution of the beamformed signal $A(e^{j\Omega_\mu},k)$ at time k for the frequency sub-band $\Omega_\mu$. Whereas $|A(e^{j\Omega_\mu},k)|^2$ can readily be obtained from the output of the beamforming means, the estimate of $|A_n(e^{j\Omega_\mu},k)|^2$ (i.e. $\widetilde{A}_n(e^{j\Omega_\mu},k)$) is obtained as described above (see also detailed description below). Employment of a thus designed Wiener filter results in a very efficient and reliable post-filtering with stable convergence characteristics. In addition, the realization of such a post-filtering means by the above Wiener-like filter is advantageous in terms of processor load and time consumption.

According to a preferred embodiment $\hat{Y}_a(e^{j\Omega_\mu},k)$, i.e. the estimate for $|A(e^{j\Omega_\mu},k)|^2|A_n(e^{j\Omega_\mu},k)|^{-2}$, is obtained by optimization according to the maximum a posteriori estimation. The method of maximum a posteriori estimation is closely related to the method of maximum likelihood and well known in the art (see, e. g., M. DeGroot, "Optimal Statistical Decisions", McGraw-Hill, 1970). The maximum a posteriori estimation results in a Wiener filter characteristics that very efficiently reduces (residual) noise that is present in the beamformed signal. Whereas a first estimate for the filter characteristics is given by $1 - \widetilde{Y}_a(e^{j\Omega_\mu}, k)^{-1}$ with $\widetilde{Y}_a(e^{j\Omega_\mu},k) = |A(e^{j\Omega_\mu},k)|^2 / \beta(e^{j\Omega_\mu},k) V(e^{j\Omega_\mu},k)$ (see above and detailed description below), $\widetilde{Y}_a(e^{j\Omega_\mu},k)$ can be optimized by means of the procedure of the maximum a posteriori estimation as follows.

In logarithmic representation one has

$$\widetilde{\Gamma}_a\left(e^{j\Omega_\nu},k\right) = 10 \log \widetilde{\gamma}_a\left(e^{j\Omega_\nu},k\right) = \Gamma_a\left(e^{j\Omega_\nu},k\right) + \Delta\left(e^{j\Omega_\nu},k\right)$$

with the actual ratio $\Gamma_a(e^{j\Omega_\mu}, k) = 10 \log \{|A(e^{j\Omega_\mu},k)|^2|A_n(e^{j\Omega_\mu},k|^{-2}\}$ that is to be estimated and the estimation error $\Delta(e^{j\Omega_\mu}, k) = 10 \log \{|A_n(e^{j\Omega_\mu},k)| / \widetilde{A}_n(e^{j\Omega_\mu},k)\}$ that is a measure for the estimated power density of the noise contribution of the beamformed signal $A(e^{j\Omega_\mu},k)$. During speech pauses ($\Gamma_a(e^{j\Omega_\mu},k) = 0$), the estimation error $\Delta(e^{j\Omega_\mu},k)$ causes artifacts in form of the so-called musical noise. An estimate $\widetilde{\Gamma}_a(e^{j\Omega_\mu},k)$ is obtained by means of the procedure of the maximum a posteriori estimation in order to minimize the musical noise. Details of this procedure are described in the detailed description below.

The present invention also provides a computer program product, comprising one or more computer readable media having computer-executable instructions for performing the steps of the examples of the inventive method described above.

Moreover, herein it is provided a signal processing means, comprising

a microphone array comprising at least two microphones configured to obtain detect microphone signals ($y_m$);

a beamforming means configured to process the microphone signals ($y_m$) to obtain a beamformed signal (A);

a blocking matrix means configured to process the microphone signals ($y_m$) to obtain the power densities ($U_m$) of noise contributions of each of the microphone signals ($y_m$);

a processing means configured to process the power densities ($U_m$) of noise contributions of each of the microphone signals ($y_m$) to obtain an average short-time power density (V) from the power densities ($U_m$) of noise contributions of each of the microphone signals ($y_m$);

a processing means configured to estimate the power density of a noise contribution (An) of the beamformed signal (A) on the basis of the average short-time power density (V) obtained from the power densities ($U_m$) of noise contributions of each of the microphone signals ($y_m$); and

a post-filtering means configured to filter the beamformed signal (A) on the basis of the estimated power density ($\tilde{A}_n$) of the noise contribution (An) of the beamformed signal (A) to obtain an enhanced beamformed signal (P).

The signal processing means may further comprise an analysis filter bank configured to filter the microphone signals ($y_m$) to obtain sub-band signals $Y_m(e^{j\Omega\mu},k)$ at time k for the frequency sub-band $\Omega_\mu$; and a synthesis filter bank configured to filter the enhanced beamformed signal (P) to obtain an enhanced audio signal (p).

In particular, the signal may comprise a General Side Lobe Canceller that comprises the beamforming means, the blocking matrix and a processing means configured to output a noise reduced beamformed signal obtained by means of the blocking matrix means.

It should be noted that the signal processing means may also be configured to estimate the power density of a noise contribution (An) of the beamformed signal (A) by a multiplication of the short-time power density (V) of the noise contributions of each of the microphone signals ($y_m$) with a real factor $\beta(e^{j\Omega\mu},k)$ at time k for the frequency sub-band $\Omega_\mu$ that is adapted to satisfy the relation for the expectation values E

$$E\{\tilde{A}_n(e^{j\Omega_\mu},k)\} = E\left\{\left|A(e^{j\Omega_\mu},k)\right|^2_{A_s(e^{j\Omega_\mu},k)=0}\right\}$$

where $\tilde{A}_n(e^{j\Omega\mu},k)$, $A_n(e^{j\Omega\mu},k)$ and $A_s(e^{j\Omega\mu},k)$ denote the estimated power density of the noise contribution (A_n) of the beamformed signal (A), the noise contribution of the beamformed signal (A) and the portion of the wanted signal of the output of the beamforming means, respectively.

The post-filtering means can advantageously be a Wiener-like filter $H(e^{j\Omega\mu},k) = 1 - \hat{Y}_a(e^{j\Omega\mu},k)^{-1}$, where $\hat{Y}_a(e^{j\Omega\mu},k)$ denotes an estimate for $|A(e^{j\Omega\mu},k)|^2 |An(e^{j\Omega\mu},k)^{-2}$, where $A_n(e^{j\Omega\mu},k)$ is the noise contribution of the beamformed signal $A(e^{j\Omega\mu},k)$ at time k for the frequency sub-band $\Omega_\mu$. In particular, $\hat{Y}(e^{j\Omega\mu},k)$ can be obtained by optimization according to the maximum a posteriori estimation.

Examples of the herein disclosed signal processing means can be advantageously used in a variety of electronic communication devices. Thus, it is provided a speech recognition or speech dialog means comprising one of the above examples of the signal processing means. In addition, a hands-free telephone set comprising one of the above examples of the signal processing means is provided.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates basic steps of an example of the herein disclosed method for noise reduction including GSC processing and estimation of a post-filter scalar.

Figure 2 illustrates components of a signal processing means according to an example of the present invention including a GSC, a MAP optimizing means and a post-filtering means.

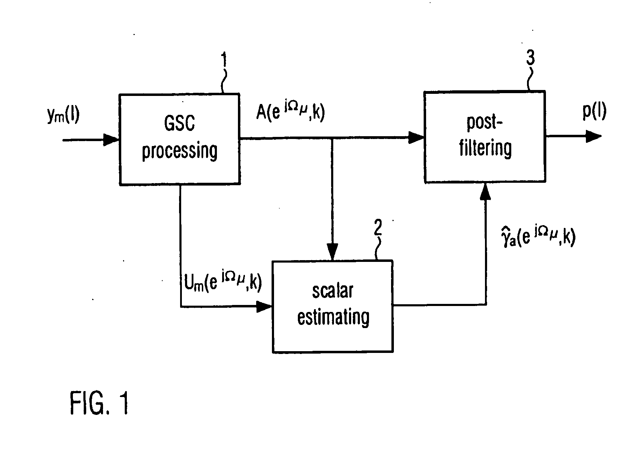

As illustrated in Figure 1 microphone signals $y_m(I)$, m = 1, .., M, where I denotes the discrete time index, that are obtained by M microphones of a microphone array, in particular, directional microphones, are processed 1 by a GSC (General Sidelobe Canceller). The GSC comprises two signal processing paths: a first adaptive path with a blocking matrix and an adaptive noise canceling means and a second path with a fixed beamformer that improves the signals pre-processed, e.g., by a means for time delay compensation, using a fixed beam pattern. The blocking matrix is optimized to generate noise reference signals used to subtract the (residual) noise of the output signal of the fixed beamformer.

By means of the GSC the Discrete Fourier Transform (DFT) coefficient, i.e. the sub-band signal, $A(e^{j\Omega\mu},k)$ (the imaginary unit is denoted by j) is obtained at time k for the frequency sub-band $\Omega_\mu$ as known in the art. Moreover, for each channel m the noise portions $U_m(e^{j\Omega\mu},k)$ of the microphone signals $y_m(I)$ are obtained as sub-band signals output by the blocking matrix comprised in the employed GSC.

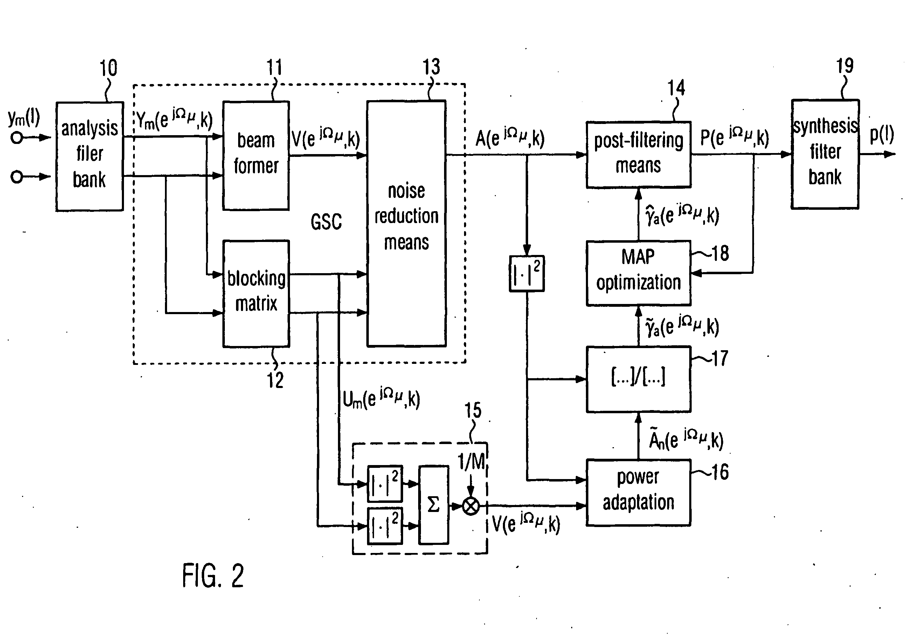

It is a basic feature of the present invention to determine 2 a post-filter scalar $\hat{Y}(e^{j\Omega\mu},k)$ based on the output of the blocking matrix $U_m(e^{j\Omega\mu},k)$ and the output of the GSC $A(e^{j\Omega\mu},k)$ that is used for post-filtering 3 the output of the GSC $A(e^{j\Omega\mu},k)$ in order to obtain noise reduced DFT coefficients $P(e^{j\Omega\mu},k)$ and eventually a noise reduced audio signal (wanted signal) p(I). The invention particularly concerns an efficient and reliable determination of $\hat{Y}_a(e^{j\Omega\mu},k)$. In the following details of the signal processing and an example of the inventive signal processing means are described with reference to Figure 2.

The microphone signals $y_m(I)$ are processed by an analysis filter bank 10 to obtain sub-band signals $Y_m(e^{j\Omega\mu},k)$ that are suitable for the further processing. The analysis filter bank can, e.g., realize Hanning windowing, Hamming windowing or Gaussian windowing. The sub-band signals $Y_m(e^{j\Omega\mu},k)$ are input in a GSC comprising a beamformer 11 and a blocking matrix 12 as well as a noise reduction means 13 that subtracts the noise estimated gained by the blocking matrix 12 from the sub-band signals $Y_m(e^{j\Omega\mu},k)$ to obtain the noise reduced Discrete Fourier Transform (DFT) coefficient $A(e^{j\Omega\mu},k)$.

The blocking matrix 12 is filtering means of an adaptive kind. The resulting noise signals output by the blocking matrix should ideally block completely the desired or useful signal within the input signals. A Walsh-Hadamard kind of blocking matrix or a Griffiths-Jim blocking matrix might be used. The Walsh-Hadamard blocking matrix can, in particular, be established for arrays consisting of $M=2^n$ microphones.

According to the present invention the output of the GSC shall be subject to some processing in order to further reduce residual noise. The post-filtering means 14 can be realized in the form of a Wiener filter or a spectral subtraction filter. A Wiener-like filter is given by a filter characteristic as

$$H(e^{j\Omega}) = 1 - \left( \frac{S_{a_s a_s}(\Omega) + S_{a_n a_n}(\Omega)}{S_{a_n a_n}(\Omega)} \right)^{-1}$$

where $S_{a_s a_s}(\Omega)$ and $S_{a_n a_n}(\Omega)$ denote the auto power density spectrum of the wanted signal and the noise perturbation contained in the output $A(e^{j\Omega\mu},k)$ of the GSC, respectively. Furthermore, it is assumed that the wanted signal and the noise perturbation are uncorrelated.

The a posteriori signal-to-noise ratio (SNR) given by the expression in brackets of the above formula is usually estimated by a temporal averaging as known in the art for stationary perturbations. However, the present invention relates to the suppression of time-dependent perturbations. Thus, a time-dependent estimate for a post-filtering scalar

$$\gamma_a(e^{j\Omega_\mu},k) = \frac{\left| A(e^{j\Omega_\mu},k) \right|^2}{\left| A_n(e^{j\Omega_\mu},k) \right|^2}$$

(where $A_n$ denotes the noise portion of A) has to be obtained that is to be used for the post-filtering of the output $A(e^{j\Omega m},k)$ of the GSC.

In order to obtain an estimate $\tilde{Y}_a(e^{j\Omega\mu},k)$ for $Y_a(e^{j\Omega\mu},k)$ information of the direction of incident of sound has to be achieved by estimating $A_n$. It is noted that A can directly be obtained from the output of the GSC. $A_n$ is obtained from the output signals of the blocking matrix 12. To be more precise, according to the present example the average short-time power density of the output signals of the blocking matrix $V(e^{j\Omega\mu},k)$ is obtained by stage 15 of Figure 2:

$$V(e^{j\Omega_\mu},k) = \frac{1}{M}\sum_{m=1}^{M} U_m\left(e^{j\Omega_\mu},k\right) U^*_m\left(e^{j\Omega_\mu},k\right)$$

where the asterisk denotes the complex conjugate. An estimate $\tilde{A}_n(e^{j\Omega\mu},k)$ for $|A_n(e^{j\Omega\mu},k)|^2$ can be obtained by means of the real factor $\beta(e^{j\Omega\mu},k)$, i.e. $\tilde{A}_n(e^{j\Omega\mu},k) = \beta(e^{j\Omega\mu},k) V(e^{j\Omega\mu},k)$. According to the present example the real factor $\beta(e^{j\Omega\mu},k)$ is adapted to satisfy the relation for the expectation values E

$$E\{\tilde{A}_n(e^{j\Omega_\mu},k)\} = E\left\{\left| A(e^{j\Omega_\mu},k) \right|^2_{A_s(e^{j\Omega_\mu},k)=0}\right\}$$

where $A_s(e^{j\Omega\mu},k)$ is the portion of the wanted signal of the output of the GSC $A(e^{j\Omega\mu},k)$. Thus, one obtains

$$\tilde{\gamma}_a(e^{j\Omega_\nu},k) = \frac{\left|A(e^{j\Omega_\nu},k)\right|^2}{\left|\tilde{A}_n(e^{j\Omega_\nu},k)\right|^2} \; .$$

By the factor $\beta(e^{j\Omega\mu},k)$ power adaptation 16 of the power density of the outputs of the GSC and the blocking matrix is obtained. The estimate for the post-filter scalar $\tilde{Y}_a(e^{j\Omega\mu},k)$ is determined in stage 17 of Figure 2. Optimization of the post-filter scalar is performed in stage 18. The process of optimization will be described in the following.

According to the present example illustrated in Figure 2, the post-filtering means 14 shall be adapted on the basis of a maximum a posteriori (MAP) estimation of the noise power spectral density. The MAP estimation can readily be obtained in logarithmic representation and, thus, a logarithmic estimate for the post-filtering scalar can be formulated as

$$\tilde{\Gamma}_a(e^{j\Omega_\nu},k) = 10\log \tilde{\gamma}_a(e^{j\Omega_\nu},k) = 10\log \frac{\left|A(e^{j\Omega_\nu},k)\right|^2}{\left|A_n(e^{j\Omega_\nu},k)\right|^2} + 10\log \frac{\left|A_n(e^{j\Omega_\nu},k)\right|^2}{\left|\tilde{A}_n(e^{j\Omega_\nu},k)\right|^2}$$

$$= 10\log \gamma_a(e^{j\Omega_\nu},k) + 10\log \delta(e^{j\Omega_\nu},k)$$

$$= \Gamma_a(e^{j\Omega_\nu},k) + \Delta(e^{j\Omega_\nu},k)$$

where $\Delta(e^{j\Omega\mu},k)$ represents the estimation error. This estimation error results in a so-called musical noise artifact during speech pauses. Obviously, it is desirable to minimize this estimation error $\Delta(e^{j\Omega\mu},k)$.

Minimization of the estimation error $\Delta(e^{j\Omega\mu},k)$ is obtained as follows. It should be noted that $\Gamma_a(e^{j\Omega\mu},k)$ and $\Delta(e^{j\Omega\mu},k)$ are assumed to be representations of stochastic variables.

For a given observable, i.e. $\tilde{\Gamma}_a(e^{j\Omega\mu},k)$, the probability that the quantity that is to be estimated, i.e. $\Gamma_a(e^{j\Omega\mu},k)$, assumes a particular value is given by the conditional density $\rho(\Gamma_a \mid \tilde{\Gamma}_a)$ (in the following the argument $(e^{j\Omega\mu},k)$ is omitted for simplicity). According to the principle of MAP (for details, see E. Hänsler: "Statistische Signale", Springer Verlag, Berlin (Germany), 2001) we have to choose the value for $\Gamma_a$ that maximizes $\rho(\Gamma_a \mid \tilde{\Gamma}_a)$:

$$\hat{\Gamma}_a = \arg\max_{\Gamma_a} \rho(\Gamma_a \mid \tilde{\Gamma}_a)$$

By Bayes' rule the conditional density $\rho$ can be expressed as

$$\rho(\Gamma_a \mid \tilde{\Gamma}_a) = \frac{\rho(\tilde{\Gamma}_a \mid \Gamma_a)\,\rho(\Gamma_a)}{\rho(\tilde{\Gamma}_a)}$$

where $\rho(\Gamma_a)$ is known as the a priori density. Maximization requires for

$$\frac{\partial \rho(\tilde{\Gamma}_a \mid \Gamma_a)\,\rho(\Gamma_a)}{\partial \Gamma_a} = 0$$

Based on empirical studies the conditional density can be modeled by a Gaussian distribution with variance $\psi_\Delta$:

$$\rho(\tilde{\Gamma}_a \mid \Gamma_a) = \frac{1}{\sqrt{2\pi\,\Psi_\Delta}} \exp\left(-\frac{(\tilde{\Gamma}_a - \Gamma_a)^2}{2\Psi_\Delta}\right).$$

Then, assuming that the real and imaginary parts of both the wanted signal and the perturbation can be described as average-free Gaussians with identical variances $\rho(\Gamma_a)$ can be approximated by

$$\rho(\Gamma_a) = \frac{1}{\sqrt{2\pi\,\Psi_{\Gamma_a}(\xi)}} \exp\left(-\frac{(\Gamma_a - \mu_{\Gamma_a}(\xi))^2}{2\Psi_{\Gamma_a}(\xi)}\right)$$

with the a priori SNR $\xi = \psi_s / \psi_n$ and $\psi_{\Gamma_a}(\xi) = K\xi/(1+\xi)$ and $\mu_{\Gamma_a}(\xi) = 10\log(\xi+1)$, where K is the upper limit of the variance $\psi_{\Gamma_a}(\xi)$. Experiments have shown that satisfying results can be achieved with, e.g., K = 50.

Solution for the maximization requirement above results in

$$\hat{\Gamma}_a = \frac{K\xi\tilde{\Gamma}_a + (\xi+1)\Psi_\Delta\,10\log(\xi+1)}{K\xi + (\xi+1)\Psi_\Delta}.$$

from which the scalar estimate $\hat{\gamma}_a = 10^{\hat{\Gamma}_a/10}$ readily results.

In the above equation the instantaneous a posteriori SNR is expressed as a function of the perturbed measurement value $\tilde{\Gamma}_a$, the a priori SNR $\xi$ as well as the variance $\psi_\Delta$ (note that $\hat{\Gamma}_a = \tilde{\Gamma}_a$ for $\psi_\Delta = 0$). It is noted that in the limit of $\psi_\Delta \to \infty$ the filter weights of the standard Wiener characteristics are obtained. Moreover, if the a priori SNR $\xi$ is negligible, e.g., during speech pauses, the filter is closed in order to avoid musical noise artifacts.

Consequently, the above-mentioned Wiener characteristics for the post-filtering means 14 are obtained for each time k und frequency interpolation point $\Omega_\mu$ as follows:

$$H(e^{j\Omega_\mu}, k) = 1 - \hat{\gamma}_a^{-1}(e^{j\Omega_\mu}, k).$$

The output of the GSC, i.e. the DFT coefficient $A(e^{j\Omega_\mu}, k)$, is filtered by the post-filtering means 14 adapted as described above. This filtering results in the noise reduced DFT coefficient $P(e^{j\Omega_\mu}, k) = H(e^{j\Omega_\mu}, k) A(e^{j\Omega_\mu}, k)$. Eventually, a synthesis filter bank 19 is employed to obtain a full-band noise reduced audio signal p(l).

In order to realize the above-described method the parameters $\xi$, $\psi_\Delta$ and K have to be determined. For upper limit K of the variance $\psi_{\Gamma_a}(\xi)$ a value of about 50 has proven successful. A well-known method to determine the a priori SNR $\xi$ is the so-called decision directed approach introduced by Ephraim and Malah, "Speech Enhancement Using a Minimum Mean-Square Error Short-Time Spectral Amplitude Estimator", IEEE Transactions on Acoustics, Speech and Signal Processing, vol. ASSP-32, No. 6, December, 1984. According to this approach $\xi$ can be estimated as

$$\xi(k) = a_\xi \frac{P(k-1)}{\hat{\psi}_n}(1-a_\xi)F\left[\frac{|A(k)|^2}{\hat{\psi}_n} - 1\right]$$

with

$$F[x] = \begin{cases} x, \text{if } x > 0 \\ 0, \text{else} \end{cases}$$ and $P(k-1)$ denoting the squared magnitude of the DFT coefficient at the output of the post-filtering means 14 at time k -1. The real factor $a_\xi$ is a smoothing factor of almost 1, e.g., 0.98.

The estimate for the variance of the perturbation $\hat{\psi}_n$ is not determined by means of temporal smoothing in speech pauses. Rather spatial information on the direction of perturbation shall be used by recursively determining $\hat{\psi}_n$ as

$$\hat{\Psi}_n(k) = a_n \, \hat{\Psi}_n(k-1) + (1 - a_n) \, \tilde{A}_n(k)$$

with the smoothing factor $a_n$ that might be chosen from between 0.6 and 0.8.

Finally, $\hat{\psi}_\Delta$ is also recursively determined during speech pauses (i.e. $\psi_s = 0$) according to

$$\hat{\Psi}_\Delta(k) = a_\Delta(k) \, \hat{\Psi}_\Delta(k-1) + (1 - a_\Delta(k)) \, (\tilde{\Gamma}_a(k))^2 \, ,$$

with

$$a_\Delta(k) = \begin{cases} a_0, \text{ if } \Psi_s = 0 \\ \quad 0, \text{ else} \end{cases}$$

with the smoothing factor $a_0$ that might be chosen from between 0.6 and 0.8.

All previously discussed embodiments are not intended as limitations but serve as examples illustrating features and advantages of the invention. It is to be understood that some or all of the above described features can also be combined in different ways.

## Claims

1. Method for audio signal processing, comprising

   detecting an audio signal by a microphone array to obtain microphone signals ($y_m$):
   processing the microphone signals ($y_m$) by a beamforming means (11) to obtain a beamformed signal (A) ;
   processing the microphone signals ($y_m$) by a blocking matrix means (12) to obtain power densities ($U_m$) of noise contributions of each of the microphone signals ($y_m$);
   processing the power densities ($U_m$) of noise contributions of each of the microphone signals ($y_m$) to obtain an average short-time power density (V) from the power densities ($U_m$) of noise contributions of each of the microphone signals ($y_m$);
   estimating the power density of a noise contribution ($A_n$) of the beamformed signal (A) on the basis of the average short-time power density (V) obtained from the power densities ($U_m$) of noise contributions of each of the microphone signals ($y_m$); and
   post-filtering the beamformed signal (A) on the basis of the estimated power density ($\tilde{A}_n$) of the noise contribution ($A_n$) of the beamformed signal (A) to obtain an enhanced beamformed signal (P).

2. The method according to claim 1, wherein the beamformed signal (A) is a noise reduced signal obtained by means of the noise contributions of each of the microphone signals ($y_m$) that are obtained by the blocking matrix means.

3. The method according to claim 1 or 2, further comprising

   filtering the microphone signals ($y_m$) by an analysis filter bank to obtain sub-band signals $Y_m(e^{j\Omega_\mu},k)$ at time k for the frequency sub-band $\Omega_\mu$; and
   filtering the enhanced beamformed signal (P) by a synthesis filter bank to obtain an enhanced audio signal (p).

4. The method according to one of the preceding claims, wherein the power density of a noise contribution ($A_n$) of the beamformed signal (A) is estimated by a multiplication of the short-time power density (V) obtained from the power densities ($U_m$) of noise contributions of each of the microphone signals ($y_m$) with a real factor $\beta(e^{j\Omega_\mu},k)$ at time k for the frequency sub-band $\Omega_\mu$ that is adapted to satisfy the relation for the expectation values E

$$E\{\tilde{A}_n(e^{j\Omega_\mu},k)\} = E\left\{\left|A\ (e^{j\Omega_\mu},\tilde{k})\right|^2_{A_s(e^{j\Omega_\mu},k)=0}\right\}.$$

where $\tilde{A}_n(e^{j\Omega_\mu},k)$, $A_n(e^{j\Omega_\mu},k)$ and $A_s(e^{j\Omega_\mu},k)$ denote the estimated power density of the noise contribution ($A_n$) of the beamformed signal (A), the noise contribution of the beamformed signal (A) and the portion of the wanted signal of the output of the beamforming means, respectively.

5. The method according to one of the preceding claims, wherein the step of post-filtering the beamformed signal (A) comprises filtering the beamformed signal (A) by a Wiener filtering means ($H(e^{j\Omega_\mu},k)$) to obtain an enhanced beamformed signal (P) according to $P(e^{j\Omega_\mu},k) = H(e^{j\Omega_\mu},k)\ A(e^{j\Omega_\mu},k)$, with

$$H(e^{j\Omega_\mu},k) = 1 - \hat{\gamma}_a\left(e^{j\Omega_\mu},k\right)^{-1},$$

where $\hat{Y}_a(e^{j\Omega_\mu},k)$ denotes an estimate for $|A\ (e^{j\Omega_\mu},k)|^2|A_n(e^{j\Omega_\mu},k)|^{-2}$, where. $A_n\ (e^{j\Omega_\mu},k)$ is the noise contribution of the beamformed signal $A(e^{j\Omega_\mu},k)$ at time k for the frequency sub-band $\Omega_\mu$.

6. The method according to claim 5, wherein $\hat{Y}_a(e^{j\Omega_\mu},k)$, i.e. the estimate for $|A\ (e^{j\Omega_\mu},k)|^2|A_n(e^{j\Omega_\mu},k)|^{-2}$, is obtained by optimization according to the maximum a posteriori estimation.

7. A computer program product comprising a software code adapted to perform the following steps when executed on a computer

interfacing a microphone array to obtain microphone signals ($y_m$);
processing the microphone signals ($y_m$) by a beamforming means (11) to obtain a beamformed signal (A);
processing the microphone signals ($y_m$) by a blocking matrix means (12) to obtain power densities ($U_m$) of noise contributions of each of the microphone signals ($y_m$);
processing the power densities ($U_m$) of noise contributions of each of the microphone signals ($y_m$) to obtain an average short-time power density (V) from the power densities ($U_m$) of noise contributions of each of the microphone signals ($y_m$);
estimating the power density of a noise contribution ($A_n$) of the beamformed signal (A) on the basis of the average short-time power density (V) obtained from the power densities ($U_m$) of noise contributions of each of the microphone signals ($y_m$); and
post-filtering the beamformed signal (A) on the basis of the estimated power density ($\tilde{A}_n$) of the noise contribution ($A_n$) of the beamformed signal (A) to obtain an enhanced beamformed signal (P).

8. Signal processing means, comprising

a microphone array comprising at least two microphones configured to obtain microphone signals ($y_m$);
a beamforming means (11) configured to process the microphone signals ($y_m$) to obtain a beamformed signal (A);
a blocking matrix means (12) configured to process the microphone signals ($y_m$) to obtain power densities ($U_m$) of noise contributions of each of the microphone signals ($y_m$);
a processing means (15) configured to process the power densities ($U_m$) of noise contributions of each of the microphone signals ($y_m$) to obtain an average short-time power density (V) from the power densities ($U_m$) of noise contributions of each of the microphone signals ($y_m$);
a processing means (16) configured to estimate the power density of a noise contribution ($A_n$) of the beamformed signal (A) on the basis of the obtained average short-time power density (V) obtained from the power densities ($U_m$) of noise contributions of each of the microphone signals ($y_m$); and
a post-filtering means (14) configured to filter the beamformed signal (A) on the basis of the estimated power density ($\tilde{A}_n$) of the noise contribution ($A_n$) of the beamformed signal (A) to obtain an enhanced beamformed signal (P).

9. The signal processing means according to claim 8, further comprising

an analysis filter bank (10) configured to filter the microphone signals ($y_m$) to obtain sub-band signals $Y_m(e^{j\Omega_\mu}, k)$ at time k for the frequency sub-band $\Omega_\mu$; and
a synthesis filter bank (19) configured to filter the enhanced beamformed signal (P) to obtain an enhanced audio signal (p).

10. The signal processing means according to claim 8 or 9, comprising a General Side Lobe Canceller that comprises the beamforming means (11), the blocking matrix (12) and a processing means (13) configured to output a noise reduced beamformed signal obtained by means of the blocking matrix means (12).

11. Speech recognition or speech dialog means comprising the signal processing means according to one of the claims 8-10.

12. Hands-free telephone set comprising the signal processing means according to one of the claims 8-10.

**Patentansprüche**

1. Verfahren zur Audiosignalverarbeitung, das umfasst:

Detektieren eines Audiosignals mithilfe einer Mikrofonanordnung, um Mikrofonsignale ($y_m$) zu erhalten;
Verarbeiten der Mikrofonsignale ($y_m$) mithilfe einer Beamforming - Einrichtung (11), um ein gebeamformtes Signal (A) zu erhalten;
Verarbeiten der Mikrofonsignale ($y_m$) mithilfe einer Blocking - Matrix - Einrichtung (12), um Leistungsdichten ($U_m$) von Geräuschanteilen von jedem der Mikrofonsignale ($y_m$) zu erhalten;
Verarbeiten der Leistungsdichten ($U_m$) von Geräuschanteilen von jedem der Mikrofonsignale ($y_m$), um eine gemittelte Kurzzeit -Leistungsdichte (V) aus den Leistungsdichten ($U_m$) von Geräuschanteilen von jedem der Mikrofonsignale ($y_m$) zu erhalten;
Schätzen der Leistungsdichte eines Geräuschanteils ($A_n$) des gebeamformten Signals (A) auf der Grundlage der gemittelten Kurzzeit -Leistungsdichte (V), die aus den Leistungsdichten ($U_m$) von Geräuschanteilen von jedem der Mikrofonsignale ($y_m$) erhalten wird; und
Nachfiltern des gebeamformten Signals (A) auf der Grundlage der geschätzten Leistungsdichte ($\tilde{A}_n$) des Geräuschanteils ($A_n$) des gebeamformten Signals (A), um ein verbessertes gebeamformtes Signal (P) zu erhalten.

2. Das Verfahren gemäß Anspruch 1, in dem das gebeamformte Signal (A) ein geräuschreduziertes Signal ist, das mithilfe der Geräuschanteile von jedem der Mikrofonsignale ($y_m$), die mithilfe der Blocking - Matrix - Einrichtung erhalten werden, erhalten wird.

3. Das Verfahren gemäß Anspruch 1 oder 2, das weiterhin umfasst:

Filtern der Mikrofonsignale ($y_m$) mithilfe einer Analyse - Filterbank, um Teilbandsignale $Y_m( e^{j\Omega_\mu}, k)$ zur Zeit k für das Frequenz - Teilband $\Omega_\mu$ zu erhalten; und
Filtern des verbesserten gebeamformten Signals (P) mithilfe einer Synthese - Filterbank, um ein verbessertes Audiosignal (p) zu erhalten.

4. Das Verfahren gemäß einem der vorhergehenden Ansprüche, in dem die Leistungsdichte eines Geräuschanteils ($A_n$) des gebeamformten Signals (A) durch eine Multiplikation der Kurzzeit - Leistungsdichte (V), die aus den Leistungsdichten ($U_m$) von Geräuschanteilen von jedem der Mikrofonsignale ($y_m$) erhalten wird, mit einem reellen Faktor $\beta(e^{j\Omega_\mu}, k)$ zur Zeit k für das Frequenz - Teilband $\Omega_\mu$ geschätzt wird, der adaptiert wird, so dass er die Beziehung für den Erwartungswert E erfüllt

$$E\{\tilde{A}_n(e^{j\Omega_\mu}, k)\} = E\left\{\left|A(e^{j\Omega_\mu}, k)\right|^2_{A_s(e^{j\Omega_\mu}, k)=0}\right\},$$

wobei $\tilde{A}_n(e^{j\Omega_\mu},k)$, $A_n(e^{j\Omega_\mu},k)$ und $A_s(e^{j\Omega_\mu},k)$ die geschätzte Leistungsdichte des Geräuschanteils $(A_n)$ des gebeamformten Signals $(A)$, den Geräuschanteil des gebeamformten Signals $(A)$ und den Teil des Nutzsignals der Ausgabe der Beamforming - Einrichtung bezeichnen.

5. Das Verfahren gemäß einem der vorhergehenden Ansprüche, in dem der Schritt des Nachfilterns des gebeamformten Signals $(A)$ das Filtern des gebeamformten Signals $(A)$ mithilfe einer Wiener - Filtereinrichtung $(H(e^{j\Omega_\mu},k))$ gemäß $P(e^{j\Omega_\mu},k) = H(e^{j\Omega_\mu},k)\,A(e^{j\Omega_\mu},k)$ umfasst, um ein verbessertes gebeamformtes Signal $(P)$ zu erhalten, wobei $\hat{Y}_a(e^{j\Omega_\mu},k)$ eine Schätzung für $|A(e^{j\Omega_\mu},k|^2|A_n(e^{j\Omega_\mu},k)|^{-2}$ bezeichnet, wobei $A_n(e^{j\Omega_\mu},k)$ der Geräuschanteil des gebeamformten Signals $A(e^{j\Omega_\mu},k)$ zur Zeit k für das Frequenz - Teilband $\Omega_\mu$ ist.

6. Das Verfahren gemäß Anspruch 5, in dem $\hat{Y}_a(e^{j\Omega_\mu},k)$ , das heißt die Schätzung für $|A(e^{j\Omega_\mu},k)|^2|A_n(e^{j\Omega_\mu},k)|^{-2}$, durch eine Optimierung gemäß der Maximum - A - Posteriori - Schätzung erhalten wird.

7. Ein Computerprogrammprodukt, das einen Software - Code umfasst, der dazu ausgebildet ist, die folgenden Schritte auszuführen, wenn er auf einem Computer ausgeführt wird

> Koppeln an eine Mikrofonanordnung, um Mikrofonsignale $(y_m)$ zu erhalten;
> Verarbeiten der Mikrofonsignale $(y_m)$ mithilfe einer Beamforming - Einrichtung (11), um ein gebeamformtes Signal $(A)$ zu erhalten;
> Verarbeiten der Mikrofonsignale $(y_m)$ mithilfe einer Blocking - Matrix - Einrichtung (12), um Leistungsdichten $(U_m)$ von Geräuschanteilen von jedem der Mikrofonsignale $(y_m)$ zu erhalten;
> Verarbeiten der Leistungsdichten $(U_m)$ von Geräuschanteilen von jedem der Mikrofonsignale $(y_m)$, um eine gemittelte Kurzzeit -Leistungsdichte $(V)$ aus den Leistungsdichten $(U_m)$ von Geräuschanteilen von jedem der Mikrofonsignale $(y_m)$ zu erhalten;
> Schätzen der Leistungsdichte eines Geräuschanteils $(A_n)$ des gebeamformten Signals $(A)$ auf der Grundlage der gemittelten Kurzzeit -Leistungsdichte $(V)$, die aus den Leistungsdichten $(U_m)$ von Geräuschanteilen von jedem der Mikrofonsignale $(y_m)$ erhalten wird; und
> Nachfiltern des gebeamformten Signals $(A)$ auf der Grundlage der geschätzten Leistungsdichte $(\tilde{A}_n)$ des Geräuschanteils $(A_n)$ des gebeamformten Signals $(A)$, um ein verbessertes gebeamformtes Signal $(P)$ zu erhalten.

8. Signalverarbeitungsvorrichtung, die umfasst

> eine Mikrofonanordnung, die zumindest zwei Mikrofone umfasst, die dazu ausgebildet sind, Mikrofonsignale $(y_m)$ zu erhalten;
> eine Beamforming - Einrichtung (11), die dazu ausgebildet ist, die Mikrofonsignale $(y_m)$ zu verarbeiten, um ein gebeamformtes Signal $(A)$ zu erhalten;
> eine Blocking - Matrix - Einrichtung (12), die dazu ausgebildet ist, die Mikrofonsignale $(y_m)$ zu verarbeiten, um Leistungsdichten $(U_m)$ von Geräuschanteilen von jedem der Mikrofonsignale $(y_m)$ zu erhalten;
> eine Verarbeitungseinrichtung (15), die dazu ausgebildet ist, die Leistungsdichten $(U_m)$ von Geräuschanteilen von jedem der Mikrofonsignale $(y_m)$ zu verarbeiten, um eine gemittelte Kurzzeit -Leistungsdichte $(V)$ aus den Leistungsdichten $(U_m)$ von Geräuschanteilen von jedem der Mikrofonsignale $(y_m)$ zu erhalten;
> eine Verarbeitungseinrichtung (16), die dazu ausgebildet ist, die Leistungsdichte eines Geräuschanteils $(A_n)$ des gebeamformten Signals $(A)$ auf der Grundlage der erhaltenen gemittelten Kurzzeit -Leistungsdichte $(V)$, die aus den Leistungsdichten $(U_m)$ von Geräuschanteilen von jedem der Mikrofonsignale $(y_m)$ erhalten wird, zu schätzen; und
> eine Nachfiltereinrichtung (14), die dazu ausgebildet ist, das gebeamformte Signal $(A)$ auf der Grundlage der geschätzten Leistungsdichte $(\tilde{A}_n)$ des Geräuschanteils $(A_n)$ des gebeamformten Signals $(A)$ zu filtern, um ein verbessertes gebeamformtes Signal $(P)$ zu erhalten.

9. Die Signalverarbeitungsvorrichtung gemäß Anspruch 8, die weiterhin umfasst eine Analyse - Filterbank (10), die dazu ausgebildet ist, die Mikrofonsignale $(y_m)$ zu filtern, um Teilbandsignale $Y_m(e^{j\Omega_\mu},k)$ zur Zeit k für das Frequenz - Teilband $\Omega_\mu$ zu erhalten; und eine Synthese - Filterbank (19), die dazu ausgebildet ist, das verbesserte gebeamformte Signal $(P)$ zu filtern, um ein verbessertes Audiosignal $(p)$ zu erhalten.

10. Die Signalverarbeitungsvorrichtung gemäß Anspruch 8 oder 9, die einen Genral Side Lobe Canceller umfasst, der die Beamforming - Einrichtung (11), die Blocking - Matrix (12) und eine Verarbeitungseinrichtung (13), die dazu ausgebildet ist, ein geräuschreduziertes gebeamformtes Signal auszugeben, das mithilfe der Blocking - Matrix - Einrichtung (12) erhalten wird, umfasst.

**11.** Spracherkennungs- oder Sprachdialogvorrichtung, die die Signalverarbeitungsvorrichtung gemäß einem der Ansprüche 8-10 umfasst.

**12.** Freisprech - Telefonvorrichtung, die die Signalverarbeitungsvorrichtung gemäß einem der Ansprüche 8-10 umfasst.

**Revendications**

**1.** Procédé pour le traitement de signaux audio, comprenant

la détection d'un signal audio par un arrangement de microphones pour obtenir des signaux de microphone ($y_m$) ;
le traitement des signaux de microphone ($y_m$) par un moyen de formation de faisceaux (11) pour obtenir un signal en forme de faisceau (A) ;
le traitement de signaux de microphone ($y_m$) par un moyen de matrice de blocage (12) pour obtenir des densités de puissance ($U_m$) des contributions de bruits de chacun des signaux de microphone ($y_m$) ;
le traitement de densités de puissance ($U_m$) des contributions de bruits de chacun des signaux de microphone ($y_m$) pour obtenir une densité de puissance de courte durée moyenne (V) à partir des densités de puissance ($U_m$) des contributions de bruits de chacun des signaux de microphone ($y_m$) ;
l'estimation de la densité de puissance d'une contribution de bruits ($A_n$) du signal en forme de faisceau (A) sur la base de la densité de puissance de courte durée moyenne (V) obtenue à partir des densités de puissance ($U_m$) des contributions de bruits de chacun des signaux de microphone ($y_m$) ; et
le post-fiftrage du signal en forme de faisceau (A) sur la base de la densité de puissance estimée ($\tilde{A}_n$) de la contribution de bruits ($A_n$) du signal en forme de faisceau (A) pour obtenir un signal en forme de faisceau amélioré (P).

**2.** Le procédé selon la revendication 1, dans lequel le signal en forme de faisceau (A) est un signal réduit en bruits obtenu au moyen des contributions de bruits de chacun des signaux de mircrophone ($y_m$) qui sont obtenus par le moyen de la matrice de blocage.

**3.** Le procédé selon les revendications 1 ou 2, comprenant en outre

le filtrage des signaux de microphone ($y_m$) par banc de filtres d'analyse pour obtenir des signaux de sous-bande $Y_m(e^{j\Omega_\mu}, k)$ au moment k pour la sous-bande $\Omega_\mu$ ; et
le filtrage du signal en forme de faisceau amélioré (P) par un banc de filtres de synthèse pour obtenir un signal audio amélioré (p).

**4.** Le procédé selon l'une des revendications précédentes, dans lequel la densité de puissance d'une contribution de bruits ($A_n$) du signal en forme de faisceau (A) est estimée par une multiplication de la densité de puissance de courte durée (V) obtenue à partir des densités de puissance ($U_m$) des contributions de bruits de chacun des signaux de microphone ($y_m$) avec un acteur réel $\beta(e^{j\Omega_\mu}, k)$ au moment k pour la sous-bande de fréquence $\Omega_\mu$ qui est adaptée pour satisfaire la relation pour les espérances mathématiques E

$$E\{\tilde{A}_n(e^{j\Omega_\nu},k)\} = E\left\{\left|A(e^{j\Omega_\nu},k)\right|^2_{A_s(e^{j\Omega_\nu},k)=0}\right\}.$$

où $\tilde{A}_n(e^{j\Omega_\mu},k)$, $A_n(e^{j\Omega_\mu},k)$ et $A_s(e^{j\Omega_\mu},k)$ indiquent la densité de puissance de la contribution de bruits ($A_n$) du signal en forme de faisceau (A), la contribution de bruits du signal en forme de faisceau (A) et la portion du signal voulu de la sortie du moyen de formation de faisceaux, respectivement.

**5.** Le procédé selon l'une des revendications précédentes, dans lequel l'étape de post-filtrage du signal en forme de faisceau (A) comprend le filtrage du signal en forme de faisceau (A) par un moyen de filtrage de Wiener ($H(e^{j\Omega_\mu}, k)$) pour obtenir un signal en forme de faisceau amélioré (P) selon $P(e^{j\Omega_\mu},k) = H(e^{j\Omega_\mu},k)\, A(e^{j\Omega_\mu},k)$, avec

$$H(e^{j\Omega_\mu},k)=1-\hat{y}_a(e^{j\Omega_\mu},k)^{-1}$$

où $\hat{y}_a(e^{j\Omega_\mu},k)$ indique une estimation pour $|A(e^{j\Omega_\mu},k)|^2\,|A_n(e^{j\Omega_\mu},k)|^{-2}$, où $A_n(e^{j\Omega_\mu},k)$ est la contribution de bruits du signal en forme de faisceau $A(e^{j\Omega_\mu},k)$ au moment k pour la sous-bande de fréquence $\Omega_\mu$.

6. Le procédé selon la revendication 5, où $\hat{y}_a(e^{j\Omega_\mu},k)$, par ex. l'estimation pour $|A(e^{j\Omega_\mu},k)|^2\,|A_n(e^{j\Omega_\mu},k)|^{-2}$, est obtenu par optimisation selon l'estimation a posteriori maximale.

7. Un programme informatique comprenant un code logiciel se prêtant à l'exécution des étapes suivantes lorsqu'elles sont exécutées sur un ordinateur

faisant interface avec un arrangement de microphones pour obtenir des signaux de microphone $(y_m)$ ;
traitant les signaux de microphone $(y_m)$ par un moyen de formation de faisceaux (11) pour obtenir un signal en forme de faisceau (A) ;
traitant les signaux de microphone $(y_m)$ par un moyen de matrice de blocage (12) pour obtenir des densités de puissance $(U_m)$ des contributions de bruits de chacun des signaux de microphone $(y_m)$ ;
traitant les densités de puissance $(U_m)$ des contributions de bruits de chacun des signaux de microphone $(y_m)$ pour obtenir une densité de puissance de courte durée moyenne (V) à partir des densités de puissance $(U_m)$ des contributions de bruitsde chacun des signaux de microphone $(y_m)$ ;
estimant la densité de puissance d'une contribution de bruits $(A_n)$ du signal en forme de faisceau (A) sur la base de la densité de puissance de courte durée moyenne (V) obtenue à partir des densités de puissance (Um) des contributions de bruits de chacun des signaux de microphone $(y_m)$ ; et
post-fiftrant le signal en forme de faisceau (A) sur la base de la densité de puissance estimée $(\hat{A}_n)$ de la contribution de bruits $(A_n)$ du signal en forme de faisceau (A) pour obtenir un signal en forme de faisceau amélioré (P).

8. Un moyen de traitement de signal, comprenant

un arrangement de microphones comprenant au moins deux microphones configurés pour obtenir des signaux de microphone $(y_m)$ ;
un moyen de formation de faisceaux (11) configuré pour traiter les signaux de microphone $(y_m)$ pour obtenir un signal en forme de faisceau (A);
un moyen de matrice de blocage (12) configuré pour traiter les signaux de microphone $(y_m)$ pour obtenir les densités de puissance $(U_m)$ des contributions de bruits de chacun des signaux de microphone $(y_m)$ ;
un moyen de traitement (15) configuré pour traiter les densités de puissance $(U_m)$ des contributions de bruits de chacun des signaux de microphone $(y_m)$ pour obtenir une densité de puissance de courte durée moyenne (V) à partir des densités de puissance $(U_m)$ des contributions de bruits de chacun des signaux de microphone $(y_m)$ ;
un moyen de traitement (16) configuré pour estimer la densité de puissance d'une contribution de bruits $(A_n)$ du signal transformé (A) sur la base de la densité de puissance de courte durée moyenne (V) obtenue à partir des densités de puissance $(U_m)$ des contributions de bruits de chacun des signaux de microphone $(y_m)$ ; et
un moyen de post-filtrage (14) configuré pour filtrer le signal en forme de faisceau (A) sur la base de la densité de puissance estimée $(\tilde{A}_n)$ de la contribution sonore $(A_n)$ du signal en forme de faisceau (A) pour obtenir un signal en forme de faisceau amélioré (P).

9. Le moyen de traitement du signal selon la revendication 8, comprenant en outre

un banc de filtres d'analyse (10) configurée pour filtrer les signaux de microphone $(y_m)$ pour obtenir des signaux de sous-bande $Y_m(e^{j\Omega_\mu},k)$ au moment k pour la sous-bande de fréquence $\Omega_\mu$;
et
un banc de filtres de synthèse (19) configurée pour filtrer le signal en forme de faisceau amélioré (P) pour obtenir un signal audio amélioré (p).

10. Le moyen de traitement de signal selon les revendications 8 ou 9, comprenant un General Side Lobe Canceller qui comprend le moyen de formation de faisceaux (11), la matrice de blocage (12) et un moyen de traitement (13) configuré pour émettre un signal en forme de faisceau à bruits réduits obtenu au moyen de la matrice de blocage (12).

11. Moyen de reconnaissance de la voix ou de dialogue vocal comprenant le moyen de traitement du signal selon l'une des revendications 8 à 10.

12. Dispositif de téléphone à main libre comprenant le moyen de traitement du signal selon l'une des revendications 8 à 10.

FIG. 1

FIG. 2

EP 2 026 597 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1475997 A2

- EP 1640971 A2

**Non-patent literature cited in the description**

- **W. Herbordt ; W. Kellermann.** Frequency-Domain Integration of Acoustic Echo Cancellation and a Generalized Sidelobe Canceller with Improved Robustness. *European Transactions on Telecommunications,* March 2002, vol. 13 (2), 123-132
- **GRIFFITHS, L.J. ; JIM, C.W.** An alternative approach to linearly constrained adaptive beamforming. *IEEE Transactions on Antennas and Propagation,* 1982, vol. 30, 27

- **M. DEGROOT.** Optimal Statistical Decisions. Mc-Graw-Hill, 1970
- **E. HÄNSLER.** Statistische Signale. Springer Verlag, 2001
- **EPHRAIM ; MALAH.** Speech Enhancement Using a Minimum Mean-Square Error Short-Time Spectral Amplitude Estimator. *IEEE Transactions on Acoustics, Speech and Signal Processing,* December 1984, vol. ASSP-32 (6